# EUROPEAN PATENT SPECIFICATION

(11) **EP 2 305 610 B1**
(45) Date of publication and mention of the grant of the patent: **24.03.2021**
(21) Application number: 09802764.2
(22) Date of filing: 07.04.2009
(51) Int. Cl.: C02F 1/461, C02F 1/467

(54) **STERILIZING/ANTIBACTERIALIZING DEVICE**
STERILISIERENDE/ANTIBAKTERIELLE VORRICHTUNG
DISPOSITIF DE STÉRILISATION/ÉLIMINATION DE BACTÉRIES

(30) Priority: 31.07.2008 JP 2008197689
(43) Date of publication of application: 06.04.2011
(73) Proprietor: Mitsubishi Electric Corporation, Tokyo 100-8310 (JP)
(72) Inventor: SAITO, Mari, Tokyo 100-8310 (JP); TAKEUCHI, Shiro, Tokyo 100-8310 (JP); FURUHASHI, Takuya, Tokyo 100-8310 (JP)
(74) Representative: Pfenning, Meinig & Partner mbB
(86) International application number: PCT/JP2009/057107
(87) International publication number: WO 2010/013519

(56) References cited:
- EP-A1- 0 074 167
- WO-A2-2007/133535
- CN-A- 1 172 774
- CN-A- 101 037 245
- JP-A- 2002 177 819
- JP-A- 2003 147 563
- JP-A- 2005 046 730
- JP-A- 2005 152 867
- JP-A- 2007 063 656

## Description

### Technical Field

The present invention relates to sterilization and anti-bacterialization equipment which makes possible continuous creation of active oxygen species, which are useful to sterilization and anti-bacterialization.

### Background Art

There are conventional methods for creating active oxygen species, in which voltage is applied to electrodes immersed in water to be treated and active oxygen species are created by making use of electrolysis of water (see, for example, Patent Document 1). In these cases, the electrodes are composed of a cathode which is capable of creating active oxygen species and an anode which is composed of low surface-resistant metal or carbon material. With the cathode electrode, active oxygen species such as superoxide (O₂-), hydroxyl-radical (·OH) and hydrogen peroxide (H₂O₂) are created. These active oxygen species make the microbes in the water to be treated inactive and sterilization and anti-bacterialization of the water is performed. An electrolytic process for the removal of a significant proportion of one or more metal contaminants from waste water is known (see, for example, Patent Document 2). An efficient sterilization or bacteriostasis method is known in which water containing microorganism is sterilized by electrochemically treatment using an anode having conductive diamond and bringing the microorganism into contact with the anode (see, for example, Patent Document 3) . An apparatus capable of securely removing firm deposits on a cathode surface and stably ensuring an excellent electrolytic treatment efficiency over a long period is known (see, for example, Patent Document 4) . An electrochemical oxidation technique of waste water containing chlorobenzene compound carried out in an electrocatalysis reaction tank is known (see, for example, Patent Document 5). Low cost methods and apparatus that utilize at least one carbon-filled polymeric electrode to electrolytically generate desirable products are known (see, for example, Patent Document 6) . A water sterilization method capable of sterilizing microorganisms in water reliably at an inexpensive price without causing a risk in operation or generating harmful gas is known (see, for example,

Patent Document 7).

### Prior art documents

### Patent documents

[Patent Document 1] Japanese Unexamined Patent Application Publication No.2003-000957
[Patent Document 2] EP 0 074 167 A1
[Patent Document 3] JP 2005 046730 A
[Patent Document 4] JP 2007 063656 A
[Patent Document 5] CN 101 037 245 A
[Patent Document 6] WO 2007/133535 A2
[Patent Document 7] CN 1 172 774 A

### Disclosure of Invention

### Problems to be solved by the Invention

In traditional methods, a lot of hydrogen and chlorine are produced as by-products. Since active oxygen species created with a cathode electrode were partly disappeared at an anode electrode, the amount of active oxygen species in appearance was less than the actual amount of active oxygen species created with the cathode electrode. For example, when carbon material is used for the anode electrode, the active oxygen species turn to carbon dioxide (CO₂) in oxidizing reaction. Also, when relatively chemically stable metal, such as titanium is used for the anode electrode, the active oxygen species turn to metal oxide in oxidizing reaction. As a result of these phenomena, a problem such that the active oxygen species necessary for the performance capable of sterilization and anti-bacterialization could not stably created over a long period of time.

The objective of the present invention is to provide equipment capable of creating necessary amount of active oxygen species for sterilization and anti-bacterialization in the water to be treated, for long time. This can be attained by making the amount of active oxygen species consumed at the anode electrode restrained and the amount of active oxygen species in appearance close to the amount actually created with the cathode electrode, so that the creating efficiency is improved.

### Means for solving problems

The sterilization and anti-bacterialization equipment according to the present invention is defined in claim 1. The dependent claims describe advantageous embodiments of the sterilization and anti-bacterialization equipment according to claim 1.

### Advantages

Oxidation reaction usually occurs with the anode electrode; for example, chlorine and hydroxide in tap water supply electrons. On the other hand, the active oxygen species created with the cathode electrode are spread in the water to be treated and it is expected that they will make microbes such as bacteria inactive. However, since the movement of the active oxygen species spread in a solvent can not be controlled, part of them are practically consumed in the oxidation reactions of the anode electrode.

Since sterilization and anti-bacterialization equipment according to the present invention is provided with the anode electrode made of a polymeric material as a main material (a base material), which is hardly oxidized by the active oxygen species, it becomes possible that consumptive reaction of active oxygen species created with the cathode electrode is restrained, the amount of created active oxygen species in appearance is increased, and therefore the efficiency of the actual creation of active oxygen species can be improved. Consequently, because a large amount of active oxygen species can stably exist in the water to be treated, the capability of sterilization and anti-bacterialization of the water improves.

### Brief Description of Drawings

[Fig.1] Fig.1 is a constitution diagram in accordance with the first embodiment of the present invention.
[Fig.2] Fig.2 is a graph showing the relationship among the materials of an anode electrode, time from the start of the reaction and the amount of created hydrogen peroxide.
[Fig.3] Fig.3 is a graph showing the surface resistance of an anode electrode made of ABS resin and the amount of hydrogen peroxide created after three hours from the start of the reaction.
[Fig.4] Fig.4 is a perspective view showing a part of a sterilization and anti-bacterialization equipment in accordance with the second embodiment, where sterilization and anti-bacterialization are performed.
[Fig.5] Fig.5 is a perspective view showing a part of a sterilization and anti-bacterialization equipment in accordance with the third embodiment, where sterilization and anti-bacterialization are performed.
[Fig.6] Fig.6 is an explanatory diagram of a first example (a) and an explanatory diagram of a second example (b), each showing a part of sterilization and anti-bacterialization equipment in accordance with the third embodiment where sterilization and anti-bacterialization are performed.
[Fig.7] Fig.7 is a constitution side view (a) and a constitution front view (b), each showing the part of sterilization and anti-bacterialization equipment in accordance with the fourth embodiment, where sterilization and anti-bacterialization are performed.

### Modes for Carrying Out the Invention

Embodiments of the sterilization and anti-bacterialization equipment according to the present invention will be described hereunder with reference to the accompanying drawings.

### Embodiment 1

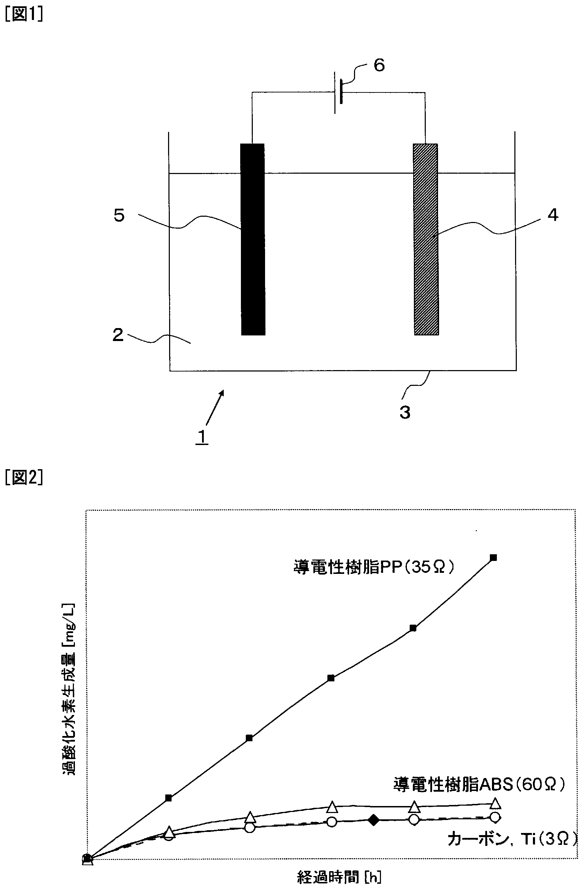

Fig.1 is a schematic constitution diagram in accordance with a first embodiment of the present invention. The sterilization and anti-bacterialization equipment 1 includes a reaction chamber 3 for storing water to be treated 2 and creating active oxygen species, a pair of electrodes consisting of a cathode electrode 4 having capability of creating active oxygen species and an anode electrode 5, both of which are disposed such that at least some part of them are immersed in the water 2, and a power source 6 for energizing said electrodes 4 and 5.

The cathode electrode 4 is made of carbon, metal or other electrically conductive material. The capability of creating active oxygen species is provided to the cathode electrode 4 by means that polyaniline is in contact with the surface of the cathode electrode 4.

The anode electrode 5 is made of a polymeric material without electrical conductivity and an electrically conductive carbon filler. Since the electrode 5 needs to be electrically conductive when a polymeric material without electrical conductivity is used for the electrode 5, it is manufactured by mixture with an electrically conductive carbon-filler in order to add the electrical conductivity to the electrode 5. (The resin provided with the electrical conductivity is designated as "electrically conductive resin" hereafter.) Consequently, since the anode electrode can be made mainly of polymeric materials such as polypropylene (PP), PET and ABS resin, which have no electrical conductivity but property of acid-resistance or alkali-resistance, this structure can prevent the anode 5 from being corroded by the water to be treated or the active oxygen species. Also, electrical conductivity, acid-resistance and alkali-resistance of the anode electrode 5 can be improved by making the anode electrode 5 manufactured by mixing electrically conductive polymer (such as polyaniline).

By using the sterilization and anti-bacteria equipment as shown in Fig.1, the amount of created hydrogen peroxide (H₂O₂), which is one kind of active oxygen species, was measured. Here, the capability of creating active oxygen species was provided to the cathode electrode 4 by means that a material having the property of catalytic action, here polyaniline, by which active oxygen species were produced by reduction of dissolved oxygen in the water to be treated, was brought into contact with the surface of the cathode electrode 4. Also, for the anode electrode 5, the same objective measurements by using the following four kinds of materials, carbon, metal (Ti) and the electrically conductive resins, (PP, ABS) were conducted. According to the measurements, as shown in Fig. 2, the concentration of the hydrogen peroxide in the water to be treated became an equilibrium state after approximately five hours from the start of reaction. The amounts of hydrogen peroxide after three hours from the start of reaction were 1.7mg/L with the carbon (surface resistance 3Ω) , 1. 7mg/L with the metal (Ti, surface resistance 1Ω), 9.3mg/L with the electrically conductive resin (PP, surface resistance 35Ω) and 4.0mg/L with the electrically conductive resin (ABS, 60Ω). As a result of these measurements, it was understood that the amount of created hydrogen peroxide in appearance varies depending on the material being used for the anode electrode 5, although the surface resistance of the anode affected this result.

Also, the created amount of hydrogen peroxide was measured with the anode electrode 5 of which the main constituent material was ABS resin and the surface resistance was 60-10¹¹Ω.

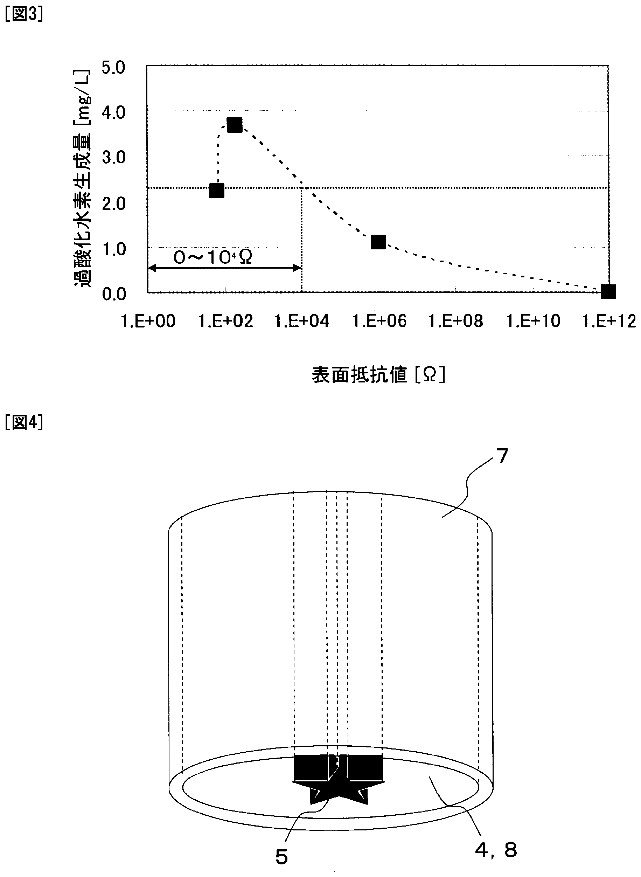

According to the measurements, as shown in Fig.3, the created amounts of hydrogen peroxide after three hours from the start of reaction were 3.4mg/L with the surface resistance 60Ω, 3.7mg/L with the surface resistance 200Ω and 1.1mg/L with the surface resistance 10⁶Ω. In these measurements, hydrogen peroxide was not created when ABS resin with surface resistance of 10¹¹Ω was used, because the water between the two electrodes could not be energized at this time.

According to these measurements, it was turned out that when the surface resistance of the anode electrode 5 was between 1Ω and 200Ω, the amount of hydrogen peroxide consumed on the surface of anode electrode 5 was restrained, and, as a result of this, the amount of usable hydrogen peroxide was increased. Also, when the surface resistance of the electrode 5 was between 200Ω and 10⁶Ω, decreased of the amount of created hydrogen peroxide caused by decreasing the amount of electrons per unit time received by the cathode electrode 4 was more than decrease of the amount of hydrogen peroxide consumed on the surface of the anode electrode 5, so that the amount of usable hydrogen peroxide was consequently decreased.

By the reasons stated above, as the main composed material of the anode electrode 5 is a polymeric material, in comparison with a case that the main composed material of anode electrode 5 is not a polymeric material, consumptive reaction of the hydrogen peroxide on the surface of the anode electrode 5 can be restrained, and, therefore, the amount of hydrogen peroxide in the water to be treated is increased. In addition, it is possible that the corrosion of the anode electrode 5 caused by the hydrogen peroxide created with the cathode electrode 4 can be prevented, when the polymeric material, which does not easily affect the consumption reaction of the hydrogen peroxide around the anode electrode 5, is used for the electrode 5 or a main material of the electrode 5. Therefore, since the consumption reaction of hydrogen peroxide around the anode electrode 5 can be restrained by means of using the above mentioned constitution in the sterilization and anti-bacterialization equipment, the efficient creation of hydrogen peroxide can be carried out, so that the capability of sterilization and anti-bacterialization of the sterilization and anti-bacterialization equipment can be improved.

Consequently, as shown in Fig.3, the decreased amount of hydrogen peroxide consumed on the surface of the anode electrode 5 is made more than the decreased amount of hydrogen peroxide created with the cathode electrode 4, by making the surface resistance of the anode electrode 5 set to be 0-10⁴Ω. As a result, the amount of usable hydrogen peroxide can be increased.

The water to be treated 2 mentioned in the first embodiment includes not only tap water, groundwater, water for the industrial use and drinking water but also water in a pool or a bathhouse, seawater and water to be supplied to various kinds of industrial facilities. Also, the microbes to be considered for the sterilization·anti-bacterialization action in the first embodiment are bacteria, hyphomycetes, colibacillus, yeast, unicellular organism, protozoa, virus and so forth.

Furthermore, in the first embodiment, both electrodes 4 and 5 are not necessarily arranged oppositely to each other; moreover, more than two electrodes 4 and 5 may be disposed within the reaction chamber 3.

### Embodiment 2

Fig.4 is a perspective view of a part of a sterilization and anti-bacterialization equipment in accordance with a second embodiment of the present invention, where water to be treated is sterilized and anti-bacterialized. Here, an inner wall 8 of a tube 7, in which water to be treated flows, is let to be a cathode electrode 4, having the capability of creation of the active oxygen species. On the other hand, an anode electrode 5 having a polygonal shaped outer circumference is disposed in the middle of the tube 7. In this equipment, the tube 7 plays the same role as the reaction chamber 3 in Fig.1.

Since the sterilization and anti-bacterialization equipment in accordance with the second embodiment has a structure, in which the polygonal shaped anode electrode 5 is disposed in the middle of the tube 7, products created around the both electrodes can flow down without coming in contact with the opposed electrode. Also, the shape of the anode electrode 5 is polygonal, so that the area in contact with the water to be treated is increased.

In this constitution, because the water flowing down in the tube 7 is not easily agitated, active oxygen species created with the cathode electrode 4 are hardly brought into contact with the anode electrode 5 and hardly consumed at the anode electrode 5. With this constitution, the amount of created active oxygen species in appearance can be made close to the actual amount of active oxygen species created, without some special measures to be taken such as setting ion-exchange membrane between the cathode electrode 4 and the anode electrode 5. Moreover, sufficient electron-receiving area can be secured even in the reduced space.

In addition, since some active oxygen species are created around the inner wall 8 of the tube 7, the chances of contact with the microbes in the water to be treated increase, and, therefore, the effect for the capability of sterilization and anti-bacterialization is improved. Also, since it is expected that sterilization and anti-bacterialization can be efficiently carried out even in the reduced space, sterilization and anti-bacterialization can be carried out in places such as the inside of a drain pipe of an air conditioner.

By making the sterilization and anti-bacterialization equipment constructed using the inner wall of the tube 7 as the one in the second embodiment, the efficient sterilization and anti-bacterialization can be carried out.

### Embodiment 3

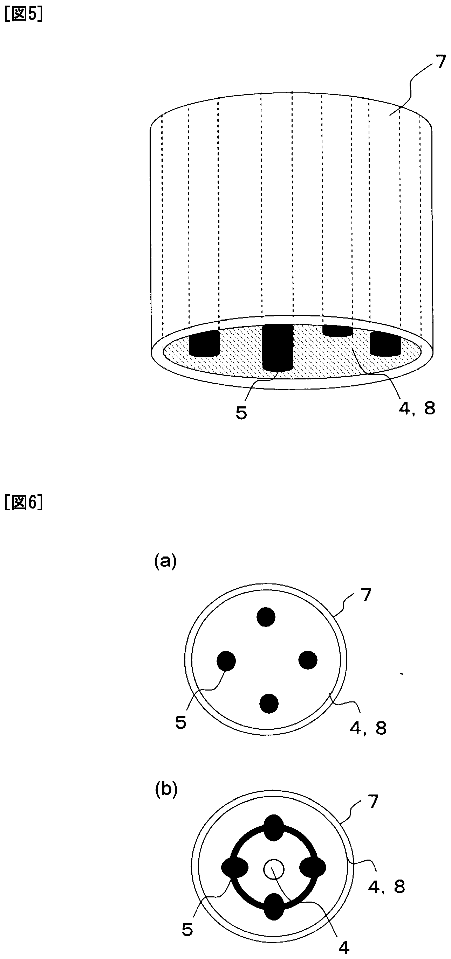

Fig.5 is a perspective view of a part of a sterilization and anti-bacterialization equipment, in accordance with the third embodiment of the present invention, where water to be treated is sterilized and anti-bacterialized. This is a variation of the second embodiment, and the different point from the second embodiment is that a plurality of the anode electrodes 5 is disposed along the inner wall 8 of the tube 7.

Fig.6 is explanatory diagrams of a first example (a) and a second example (b), each showing a part of the sterilization and anti-bacterialization equipment, in accordance with the third embodiment, where sterilization and anti-bacterialization of water to be treated is performed. The anode electrodes 5 can independently be installed inside the inner wall 8 of the tube 7 as shown in Fig. 6 (a) or can be connected to each other as shown in Fig.6 (b). Also, one another cathode electrode 4 can be additionally installed in the middle of the tube 7 in addition to the inner wall 8.

Furthermore, in the second and the third embodiments, it is favorable that the outer circumference of the tube 7 is wrapped with the insulated material such as rubber so as to present leakage of current.

In the sterilization and anti-bacterialization equipment in accordance with the third embodiment, since the anode electrodes 5 are located along the inner wall 8 of the tube 7 (the shape of the outer circumference of one anode electrode can be a circular cylinder or a polygon), products created around both of the anode electrodes 5 and the cathode electrode 4 can flow down without coming in contact with the other opposed electrodes. In addition, the contact area with the water to be treated 2 can be increased by means of a plurality of anode electrodes 5 installed. Consequently, the sterilization and anti-bacterialization effect of the sterilization and anti-bacterialization equipment in accordance with the third embodiment can be more than or equal to that of the equipment in accordance with the second embodiment.

### Embodiment 4

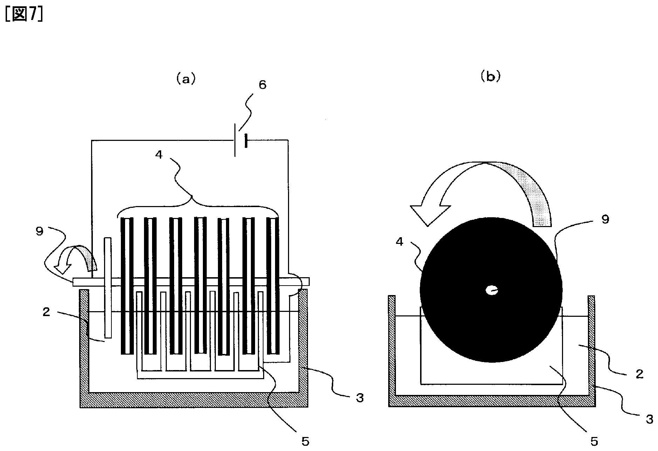

Fig.7 is a constitution side view (a) and a constitution front view (b), each showing a part of the sterilization and anti-bacterialization equipment in accordance with the fourth embodiment of the present invention, where sterilization and anti-bacterialization of water to be treated is performed. Here, the water to be treated 2 is reserved in a reaction chamber 3, and a plurality of plate-shaped anode electrodes 5 are maintained in stationary conditions and disposed in parallel at equal intervals within the reaction chamber 3. A plurality of disk-shaped cathode electrodes 4, which are able to be rotated, are disposed between plate-shaped anode electrodes 5.

The central part of each disk-shaped cathode electrode 4 is attached to the electrically conductive rotational shaft 9, and these electrodes are rotatable with the rotational shaft 9. Also, this equipment is designed so that the upper part of the electrode 4 is located in air, and the lower part in the water.

In the sterilization and anti-bacterialization equipment in accordance with the fourth embodiment, a part projected out of the surface of the water 2 and a part immersed in the water 2 exist by making the cathode electrode 4 rotatable. Since the cathode electrodes 4 are rotated around the rotational shaft 9, they can be positioned so that a part of them alternately comes into and goes out of the water 2. Furthermore, it is favorable that the twist of wiring caused by the disk rotation is prevented by making the rotational shaft 9 electrically conductive.

In this equipment constitution, water membrane is always formed on the surface of the part projected out of the surface of the water 2, by adjusting the velocity of rotation, in order for the cathode electrode 4 not to be dried. Also, since the cathode electrodes 4, which have the property of creating active oxygen species, are rotatable, they periodically come in contact with a large amount of oxygen, and as a result, the efficient creation of active oxygen species is made possible. Also, although in Fig.7, the upper part of the cathode electrode 4 (approximately two third of the entire electrode) is positioned in the air and the lower part (approximately one third) in the water 2, the constitution of the equipment is not necessarily limited to this example. For instance, by making half of the entire cathode electrode 4 immersed in the water 2, the cathode electrode 4 can be immersed in the water 2, and brought in contact with the air as a whole, and, as a result, the efficient creation of active oxygen species are made possible.

The material used for the cathode or the anode, which was explained in the first embodiment, can also be utilized in the fourth embodiment.

### Reference Numerals

1 sterilization and anti-bacterialization equipment, 2 water to be treated, 3 reaction chamber, 4 cathode electrode, 5 anode electrode, 6 power source, 7 tube, 8 inner wall of the tube, 9 rotational shaft

## Claims

1. Sterilization and anti-bacterialization equipment (1) for creating active oxygen species, comprising
an anode electrode (5),
a cathode electrode (4), wherein the capability of creating active oxygen species is provided to the cathode electrode (4) by means that polyaniline is in contact with the surface of the cathode electrode (4);
water to be treated (2) intervening between said both electrodes, the water between said both electrodes being electrically energized to create active oxygen species, wherein:
said anode electrode (5) is made of a polymeric material without electrical conductivity and an electrically conductive carbon filler,wherein said anode electrode (5) and said cathode electrode (4) are disposed such that a part of said anode electrode (5) and a part of said cathode electrode (4) are immersed in water (2) and other part of said anode electrode (5) and other part of said cathode electrode (4) are projected to air from the surface of the water (2).

2. The sterilization and anti-bacterialization equipment (1) according to claim 1, wherein:
said anode electrode (5) is made of a polymeric material having a property of acid-resistance and/or alkali-resistance.

3. The sterilization and anti-bacterialization equipment (1) according to claim 1 or claim 2, wherein:
said cathode electrode (4) is disposed to be rotated freely around a rotational shaft (9) so that a part of it comes in and goes out of the water to be treated (2) and air alternately.

4. The sterilization and anti-bacterialization equipment (1) according to claim 3, wherein:
said rotational shaft (9) is made electrically conductive.

## Patentansprüche

1. Sterilisations- und Entkeimungsanlage (1) zur Erzeugung aktiver Sauerstoffspezies, umfassend
eine Anodenelektrode (5),
eine Kathodenelektrode (4), wobei die Fähigkeit des Erzeugens aktiver Sauerstoffspezies für die Kathodenelektrode (4) dadurch bereitgestellt ist, dass Polyanilin mit der Oberfläche der Kathodenelektrode (4) in Kontakt ist;
zu behandelndes Wasser (2), das zwischen den beiden Elektroden liegt, wobei das Wasser zwischen den beiden Elektroden elektrisch erregt wird, um aktive Sauerstoffspezies zu erzeugen, wobei:
die Anodenelektrode (5) aus einem polymeren Material ohne elektrische Leitfähigkeit und einem elektrisch leitfähigen Kohlenstoff-Füllstoff hergestellt ist, wobei die Anodenelektrode (5) und die Kathodenelektrode (4) angeordnet sind, so dass ein Teil der Anodenelektrode (5) und ein Teil der Kathodenelektrode (4) in Wasser (2) eingetaucht sind und ein anderer Teil der Anodenelektrode (5) und ein anderer Teil der Kathodenelektrode (4) von der Oberfläche des Wassers (2) in die Luft ragen.

2. Sterilisations- und Entkeimungsanlage (1) nach Anspruch 1, wobei:
die Anodenelektrode (5) aus einem polymeren Material hergestellt ist, das eine Eigenschaft der Säurebeständigkeit und/oder Alkalibeständigkeit aufweist.

3. Sterilisations- und Entkeimungsanlage (1) nach Anspruch 1 oder Anspruch 2, wobei:
die Kathodenelektrode (4) angeordnet ist, um um eine Drehwelle (9) frei drehbar zu sein, so dass ein Teil von dieser abwechselnd in das zu behandelnde Wasser (2) und in die Luft eintritt und wieder austritt.

4. Sterilisations- und Entkeimungsanlage (1) nach Anspruch 3, wobei:
die Drehwelle (9) elektrisch leitfähig gemacht ist.

## Revendications

1. Équipement de stérilisation et anti-bactérisation (1) destiné à créer une espèce active de l'oxygène, comprenant
une électrode d'anode (5),
une électrode de cathode (4), dans lequel la capacité à créer une espèce active de l'oxygène est fournie à l'électrode de cathode (4) par un moyen par lequel une polyaniline est en contact avec la surface de l'électrode de cathode (4) ;
une eau à traiter (2) intervenant entre lesdites deux électrodes, l'eau entre lesdites deux électrodes étant électriquement alimentée pour créer une espèce active de l'oxygène, dans lequel :
ladite électrode d'anode (5) est faite d'un matériau polymère sans conductivité électrique et d'une charge de carbone électriquement conductrice, dans lequel ladite électrode d'anode (5) et ladite électrode de cathode (4) sont disposées de telle sorte qu'une partie de ladite électrode d'anode (5) et une partie de ladite électrode de cathode (4) soient immergées dans l'eau (2) et une autre partie de ladite électrode d'anode (5) et une autre partie de ladite électrode de cathode (4) soient projetées vers l'air depuis la surface de l'eau (2).

2. Équipement de stérilisation et anti-bactérisation (1) selon la revendication 1, dans lequel :
ladite électrode d'anode (5) est faite d'un matériau polymère présentant une propriété d'acido-résistance et/ou d'alcali-résistance.

3. Équipement de stérilisation et anti-bactérisation (1) selon la revendication 1 ou la revendication 2, dans lequel :
ladite électrode de cathode (4) est disposée de façon à être tournée librement autour d'un arbre de rotation (9) de sorte qu'une partie de celle-ci entre et sorte alternativement de l'eau à traiter (2) et de l'air.

4. Équipement de stérilisation et anti-bactérisation (1) selon la revendication 3, dans lequel :
ledit arbre de rotation (9) est rendu électriquement conducteur.
